# EUROPEAN PATENT APPLICATION

(11) **EP 4 653 999 A1**
(43) Date of publication of application: **26.11.2025**
(21) Application number: 25160240.5
(22) Date of filing: 26.02.2025
(51) Int. Cl.: G06F 3/12, G06F 8/36, B41J 3/407

(54) **PRINTER**

(30) Priority: 24.05.2024 JP 2024085081
(71) Applicant: Toshiba TEC Kabushiki Kaisha, Tokyo 141-8562 (JP)
(72) Inventor: KATO, Hiroyuki, Shinagawa-ku, Tokyo, 141-8562 (JP)
(74) Representative: Hoffmann Eitle

(57) **Abstract**

Provided is a printer capable of easily extending functions. According to an embodiment, the printer includes an API, a first wrapper API, a second wrapper API, an installation unit, and an execution unit. The API interfaces functions of the printer. The first wrapper API and the second wrapper API convert a programming language of the API, and make one or more of the functions available in first and second programming language execution environments. The installation unit installs an application. The application is created using first and second programming languages, makes one or more of the functions available in the first and second programming language execution environments, and has a function for allowing data, which is to be used when one or more of the functions are used in the first programming language execution environment, to be edited in the second programming language execution environment. The execution unit executes the application.

## Description

### CROSS-REFERENCE TO RELATED APPLICATION

This application is based upon and claims the benefit of priority from Japanese Patent Application No. 2024-085081, filed May 24, 2024, the entire contents of which are incorporated herein by reference.

### FIELD

Embodiments described herein relate generally to a printer, such as a label printer.

### BACKGROUND

A label printer prints an image such as characters or a barcode on a label sheet to form a label. Image data to be printed can be generated and edited by a personal computer (PC) or the like and transmitted to the label printer for printing. The label printer has a function of receiving a signal from the PC or the like and then executing a print job as a standard printing function.

A label printer can additionally have a standalone printing function by extending the functionality of the standard printing function. A label printer having a standalone printing function may independently acquire information from an external input device, such as a barcode reader, combine the acquired information with template data for a label, and then print the label accordingly. In order to extend the printing function, it is generally necessary to install a package of application software in the label printer for executing the standalone printing function in addition to basic firmware of the label printer. Hereinafter, such application software may be more simply referred to as an "application".

However, with the standalone printing function of the related art, only fixed, pre-defined label print data (template data) available in the installed application package can be used. When it is desired to modify the template data in some way, another application package with the modified template data needs to be installed.

### BRIEF DESCRIPTION OF THE DRAWINGS

FIG. 1 depicts a system configuration including a printer according to an embodiment.
FIG. 2 is a block diagram illustrating a hardware configuration of a printer according to an embodiment.
FIG. 3 is a block diagram illustrating a functional aspects of a printer according to an embodiment.
FIG. 4 is a diagram illustrating a standalone printing function executed by a printer according to an embodiment.
FIGS. 5A and 5B illustrate aspects of a label template to be printed by standalone printing.
FIGS. 6A and 6B illustrate aspects of label data to be printed by standalone printing.
FIG. 7 depicts a database of reference data to be referred to for the standalone printing.
FIG. 8 provides flowcharts of installing an application for standalone printing and executing a standalone printing.
FIG. 9 depicts a web utility screen for installing an application.
FIG. 10 depicts a panel display screen when standalone printing is being executed.
FIG. 11 depicts a web utility screen for changing reference data.
FIG. 12 depicts a web utility screen for editing template data.

### SUMMARY OF THE INVENTION

One of the objects of the present invention is to improve prior art techniques and overcome at least some of the prior art problems as for instance above illustrated.

According to a first aspect of the present invention, it is provided a printer, comprising an application programming interface (API) configured to interface printer functions including print control for forming a label or a tag; a first wrapper API configured to interface with the API and make one or more of the printer functions available in a first programming language execution environment; a second wrapper API configured to interface with the API and make one or more of the printer functions available in a second programming language execution environment; and an application management unit configured to install and execute an application making one or more of the printer functions available in the first programming language execution environment or the second programming language execution environment, the application using a first programming language or a second programming language and allowing data that is to be used in the first programming language execution environment to be edited in the second programming language execution environment.

Optionally, in the printer according to the first aspect of the invention, the first programming language is Qt modeling language (qml), and the second programming language is any one of Python, HTML, CSS, and JavaScript.

Optionally, in the printer according to the first aspect of the invention, the first programming language execution environment uses Qt modeling language (qml), and the second programming language execution environment is a web application execution environment using a Python server.

Optionally, in the printer according to the first aspect of the invention, the first programming language execution environment uses Qt modeling language (qml), and the second programming language execution environment is a web application execution environment using a Python server.

Optionally, in the printer according to the first aspect of the invention, a standalone printing function using the printer functions of input device control, panel control, and printing control is set using the first programming language and the first wrapper API.

Optionally, in the printer according to the first aspect of the invention, an editing function for editing a label template using a network control function among the printer functions is performed using the second programming language and the second wrapper API.

According to a second aspect of the invention, it is provided a label printer with preset label templates, the label printer comprising a label database storing a preset label template; a control panel operable by a user; a printer device for printing a label; a communication interface connectable to an external device; and a processor configured to execute one or more programs to provide an application programming interface (API) configured to interface printer functions including print control for forming a label or a tag; a first wrapper API configured to interface with the API and make one or more of the printer functions available in a first programming language execution environment; a second wrapper API configured to interface with the API and make one or more of the printer functions available in a second programming language execution environment; and an application management unit configured to install and execute an application making one or more of the printer functions available in the first programming language execution environment or the second programming language execution environment, the application using a first programming language or a second programming language and allowing data that is to be used in the first programming language execution environment to be edited in the second programming language execution environment.

Optionally, in the label printer according to the second aspect of the invention, the first programming language is Qt modeling language (qml), and the second programming language is any one of Python, HTML, CSS, and JavaScript.

Optionally, in the label printer according to the second aspect of the invention, the first programming language execution environment uses Qt modeling language (qml), and the second programming language execution environment is a web application execution environment using a Python server.

Optionally, in the label printer according to the second aspect of the invention, the first programming language execution environment uses Qt modeling language (qml), and the second programming language execution environment is a web application execution environment using a Python server.

Optionally, in the label printer according to the second aspect of the invention, a standalone printing function using the printer functions of input device control, panel control, and printing control is set using the first programming language and the first wrapper API.

Optionally, in the label printer according to the second aspect of the invention, an editing function for editing a label template using a network control function among the printer functions is performed using the second programming language and the second wrapper API.

According to a third aspect of the invention, it is provided a printer, comprising an application programming interface (API) configured to interface printer functions including print control for forming a label or a tag; a panel API that is a first wrapper of the API and configured to convert a programming language of the API to cause an external input device control unit, a panel control unit, and a print control unit to operate in a first script language to make one or more of the printer functions available in a first programming language execution environment; a web application API that is a second wrapper of the API and configured to convert a programming language of the API to cause a network control unit to operate in a second script language to make one or more of the printer functions available in a second programming language execution environment; and an application management unit configured to install and execute an application making one or more of the printer functions available in the first programming language execution environment or the second programming language execution environment, the application allowing data that is to be used in the first programming language execution environment to be edited in the second programming language execution environment.

Optionally, in the printer according to the third aspect of the invention, the first script language is Qt modeling language (qml), and the second script language is any one of Python, HTML, CSS, and JavaScript.

Optionally, in the printer according to the third aspect of the invention, the first programming language execution environment uses Qt modeling language (qml), and the second programming language execution environment is a web application execution environment using a Python server.

Optionally, in the printer according to the third aspect of the invention, a standalone printing function using the printer functions of the external input device control unit, the panel control unit, and the printing control unit is set using the first script language and the panel API.

Optionally, in the printer according to the third aspect of the invention, an editing function for editing a label template using the network control unit among the printer functions is performed using the second script language and the web application API.

Optionally, the printer according to the third aspect of the inventio further comprises a label database storing a preset label template; a control panel operable by a user; a printer device for printing a label; and a communication interface connectable to an external device.

Optionally, in the printer according to the third aspect of the invention, the external device is a web server.

### DETAILED DESCRIPTION

In general, according to one embodiment, a printer that is able to provide extended printing functions for standalone label printing and the like is described.

A printer according to an embodiment includes an application programming interface (API), a first wrapper API, a second wrapper API, an installation unit, and an execution unit. The API interfaces functions of the printer including print control for forming an image of a label or a tag. The first wrapper API converts a programming language of the API and makes one or more of the functions available in a first programming language execution environment. The second wrapper API converts a programming language of the API and makes one or more of the functions available in a second programming language execution environment. The installation unit installs an application. The application is created using the first programming language and the second programming language, makes one or more of the functions available in the first programming language execution environment and the second programming language execution environment, and has a function for allowing data, which is to be used when one or more of the functions are used in the first programming language execution environment, to be edited in the second programming language execution environment. The execution unit includes a unit configured to execute the application in the first programming language execution environment and a unit configured to execute the application in the second programming language execution environment.

Hereinafter, a printer according to an example embodiment will be described with reference to the accompanying drawings. The printer in this example is a label printer. In the drawings, the same components are denoted by the same reference symbols.

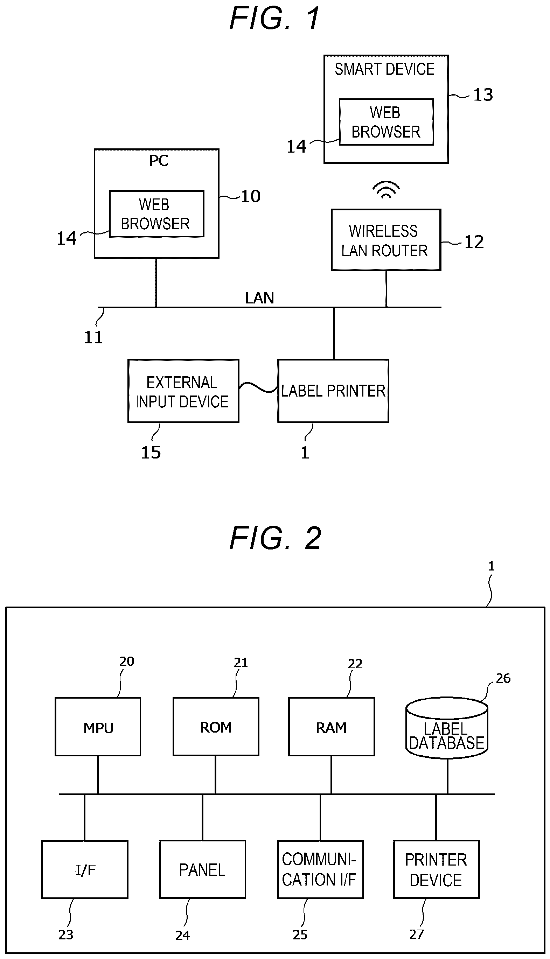

FIG. 1 is an example of a system configuration using a label printer 1 according to an embodiment. The label printer 1 and a personal computer (PC) 10 are connected to a network such as a local area network (LAN) 11. The LAN 11 is further connected to a wireless LAN router 12. A smart device 13 is wirelessly connected to the LAN 11 by, for example, WiFi via the wireless LAN router 12. Both the personal computer 10 and the smart device 13 can use a web browser 14. An external input device 15 is connected to the label printer 1 in a wired or wireless manner. The LAN 11 may be further connected to the Internet via a firewall or the like. A driver or an application to be used by the label printer 1 may be downloaded via the Internet from a website provided by a manufacturer of the label printer 1 or the like.

The label printer 1 prints an image on a label sheet to form a label. Examples of an image to be printed include text, characters, borders, barcodes, and logos. A printing method is preferably a thermal transfer method or a thermosensitive method. Other printing methods such as an electrophotographic method and an ink-jet method may be used. The label sheet is a print medium on which a peelable label can be formed. Examples of the label sheet include a rolled sheet with a plurality of adhesive sheets on a peeling sheet, or a label sheet in which radio frequency identification (RFID) has been embedded. The format and planar shape of the label sheet is not printed limited. In a case of a tag printer as another example of the printer according to an embodiment, an image can be printed on a tag sheet such as a price tag or an RF tag to form a tag to be applied to a product or the like. That is, the label printer 1 and the tag printer are both examples of a printer having a printing function of forming an image on a label or a tag.

The label printer 1 can execute a standalone printing function. A method of installing an application for such functions will be described later. As an example, the label printer 1 having a standalone printing function generates label data by combining "variable data" based on information acquired from the external input device 15 with "fixed data" stored in the printer, and prints the label data on a label sheet. Examples of the fixed data include template data of a label. Examples of the variable data include individual information such as a product ID and a current price.

FIG. 2 is a block diagram illustrating an example of a hardware configuration of the label printer 1. As illustrated in FIG. 2, the label printer 1 includes a micro processor unit (MPU) 20, a read only memory (ROM) 21, a random access memory (RAM) 22, an external device interface (I/F) 23, a panel 24, a communication interface (I/F) 25, a label database 26, and a printer device 27. These are connected via a bus or an interface. The MPU 20 loads BIOS, OS, and various applications read from the ROM 21 into the RAM 22 for execution. The external device I/F 23 is a connection terminal used to connect the external input device 15, which may be a barcode reader or a keyboard in some examples. The panel 24 is a display screen on which a current status of the printer, a progress of printing, and the like can be displayed. The panel 24 may also be used as an input operation screen by a user. The panel 24 may be a touch panel type liquid crystal display (LCD) or the like. The communication I/F 25 is used for communication with the personal computer 10 and the smart device 13.

The label database 26 stores data of labels that can be printed by the label printer 1. The stored data includes template data of a label, reference data that may be referred to based on information from the external input device 15, or the like. The reference data is, for example, a database of prices associated with product IDs.

In a case of a thermal transfer method or a thermosensitive method, the printer device 27 includes a print head in which a plurality of heating elements corresponding to print dots are arranged, a drive circuit that supplies a current to the heating elements at a predetermined timing, a platen roller that conveys a print medium such as a label sheet, a platen motor that drives the platen roller, and various sensors.

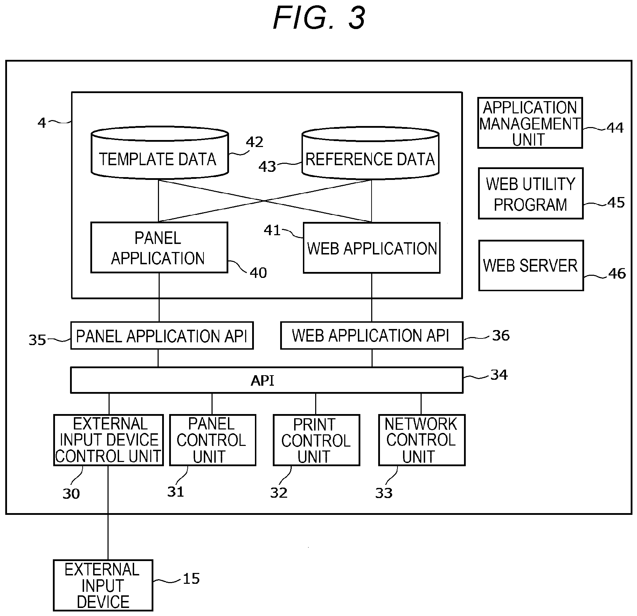

Next, functional aspects of the label printer 1 will be described. FIG. 3 is a block diagram for illustrating an example of a functional aspects of the label printer 1. These described functions can be implemented by the MPU 20 executing various applications and the like and by controlling the hardware components illustrated in FIG. 2. An external input device control unit 30 controls the external input device 15 such as a barcode reader or a USB keyboard. A panel control unit 31 controls the display screen and/or the operation screen of the panel 24. A print control unit 32 controls an operation of the printer device 27 to execute a print job in accordance with normal printing and standalone printing. A network control unit 33 controls communication with the personal computer 10 and the smart device 13 via the LAN 11.

In this manner, the label printer 1 has an external input device control function, a panel control function, a print control function, and a network control function. These are examples of certain basic functions of the label printer 1.

An API 34 is implemented to provide the above control functions as part of an application programming interface (API). That is, the API 34 interfaces the functions of the external input device control unit 30, the panel control unit 31, the print control unit 32, and the network control unit 33.

A panel application API 35 is a wrapper that converts a programming language of the API 34 and causes the external input device control unit 30, the panel control unit 31, and the print control unit 32 to operate in a first script language (for example, qt modeling language (qml)). That is, this is an example of a "first wrapper API" in which the API 34 is wrapped. The panel application API 35 makes one or more of the functions of the printer available in a first script language execution environment. A web application API 36 is a wrapper that converts the programming language of the API 34 and causes the network control unit 33 to operate in a second script language (for example, Python, HTML, CSS, or JavaScript). That is, this is an example of the "second wrapper API" in which the API 34 is wrapped. The web application API 36 makes one or more of the functions of the printer available in a second script language execution environment.

An application 4 includes an application program 40 (panel application 40), an application program 41 (web application 41), template data 42 for a label, and reference data 43. The panel application 40 is a program in the first script language (for example, qt modeling language (qml)). The first script language is an example of a first program language. The panel application 40 implements the external input device control function, the panel control function, and the print control function. The web application 41 is a web application program in the second script language (for example, Python) and HTML, CSS, or JavaScript. The second script language is an example of a second program language. The web application 41 executes the network control function.

An application management unit 44 manages installation of applications, uninstallation of applications, activation of an application, and termination of an application. The application management unit 44 is one example of a unit that installs an application. In addition, the application management unit 44 can be an example of a unit that executes an application in the first script language execution environment and an example of a unit that executes an application in the second script language execution environment.

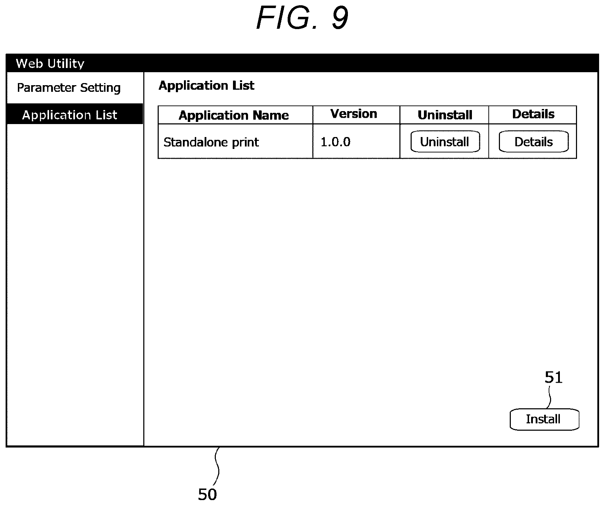

A web utility program 45 provides a web utility. A web server 46 causes the web utility program 45 to operate and makes a web utility screen 50 (see FIG. 9) later viewable.

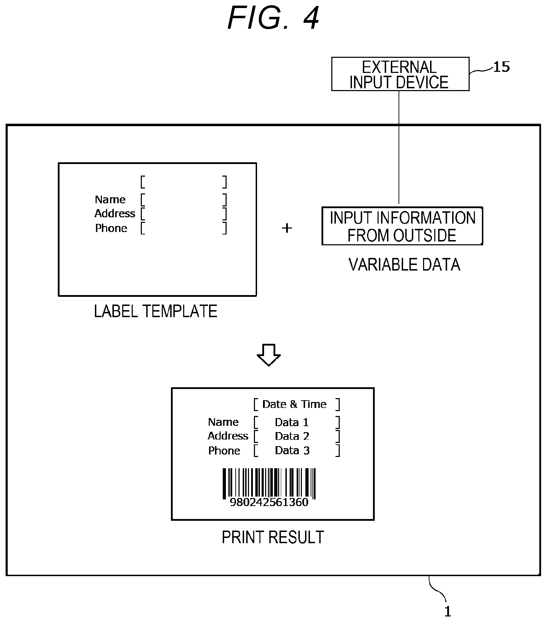

FIG. 4 is a diagram illustrating an outline of the standalone printing function. With the standalone printing function the label printer 1 independently controls the external input device 15 to acquire information, generates label data based on the acquired information, and prints the generated label data. There is an advantage that printing can be performed without any special infrastructure for generating and transmitting label data as in normal printing.

A label for standalone printing can have a fixed region and a variable region. The fixed region contains fixed data, such as set by the template data 42 stored in the printer. The variable region displays individual information such as a product ID and a price that may vary label to label, over time or the like. In this context, the individual information is information directly obtained from the external input device 15 or information provided from the reference data 43 based on the information obtained from the external input device 15. The label printer 1 embeds the information serving as the variable data into the variable region of template data 42, and forms the label data to be printed.

The external input device 15 is, for example, a barcode reader, a USB keyboard, a scanner, a meter, a thermometer, a multifunction peripheral, or a server. The information from the external input device 15 includes information obtained by reading a barcode with a barcode reader, information manually input by a USB keyboard, object information read by a scanner, a mass of an object as measured by a meter, a temperature as measured by a thermometer, and object information read by a scanner function of the multifunction peripheral, or the like.

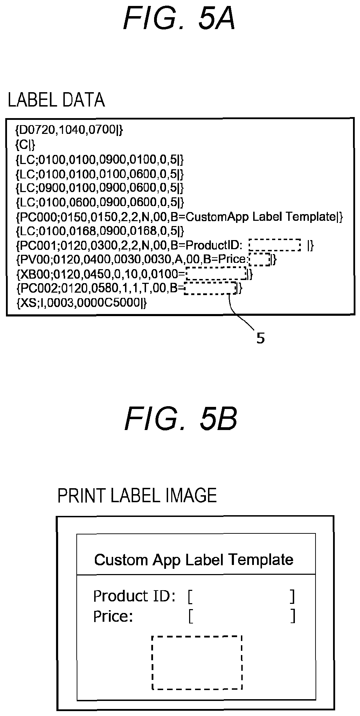

FIGS. 5A and 5B are an example of a label template before the combining of the variable data. FIG. 5A illustrates label data in a printer description language (PDL) print command. FIG. 5B is a print label image corresponding to the label data (print command). The label data (PDL data) defines in advance a region 5 (a position indicated by broken lines in FIG. 5A) in which a character string of variable data is to be placed. It may also be defined in advance from which external input device 15 the information is to be acquired. The label data illustrated in FIG. 5A is a specific example of the template data 42 in FIG. 3. In the print label image illustrated in FIG. 5B, since no variable data has yet been input for the region 5, the region 5 is left blank.

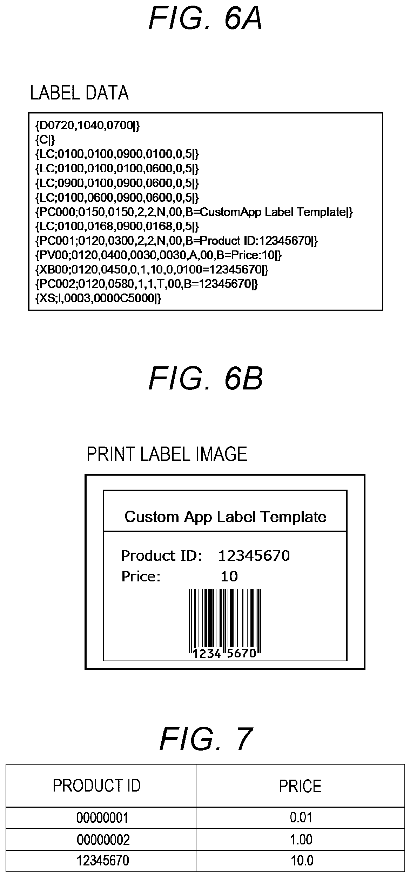

FIG. 6A illustrates label data (PDL data) after combining of the variable data. FIG. 6B is a print label image corresponding to the label data (print command). A character string of variable data has been embedded in the label data (PDL data). In this example, product ID = "12345670" and price = "10" are the variable data. The label printer 1 executes a print job based on the label data (PDL data) after the variable data has been embedded. In the print label image illustrated in FIG. 6B, the product ID, the price, and a barcode are printed based on the supplied variable data.

Among the above variable data, the product ID is information acquired from the external input device 15 such as a barcode reader. The price is information obtained by referring to a corresponding acquired product ID in the reference data 43. FIG. 7 illustrates an example of the reference data 43. The reference data 43 establishes a relationship between a product ID and a price in a database or table format. The database uses, for example, json or CSV formats. In FIGS. 6A and 6B, the product ID (12345670) was read by the barcode reader, and the corresponding price (10) for the product ID is supplied by referring to the reference data 43.

The above series of processes, that is, processes such as acquiring information from the external input device 15, referring to information from the reference data 43 as necessary, and embedding the information as variable data in the fixed data of the label can be performed by the MPU 20 executing the panel application 40.

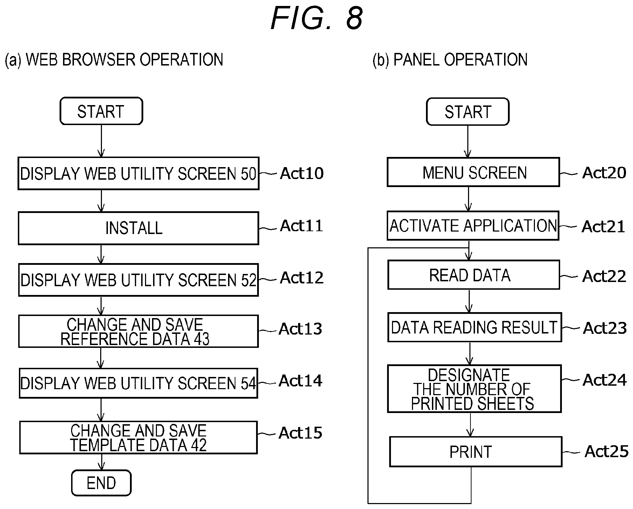

Next, an example of a procedure in which the user installs an application for executing the standalone printing function in the label printer 1 and then executes the standalone printing will be described with reference to flowcharts in FIG. 8.

For the web browser operation, the user activates the web browser 14 of the personal computer 10 or the smart device 13, accesses the web server 46 of the label printer 1 via the LAN 11, and views the web utility screen 50 (Act 10 in FIG. 8). FIG. 9 illustrates an example of the web utility screen 50. The web utility screen 50 is published by the web server 46 operating the web utility program 45. The user can view and operate the web utility screen 50 through the web browser 14.

The web utility screen 50 has a menu configuration in which a left side of the screen is selectable. The user selects "application list" and presses an "install" button 51 on the application list screen. When the "install" button 51 is pressed, the application management unit 44 of the label printer 1 installs the application (Act 11 in FIG. 8).

The application to be installed packages the application for executing the standalone printing, the template data 42, and the reference data 43. The application for executing the standalone printing includes the panel application 40 and the web application 41 for the standalone printing. The panel application 40 for executing external input device control, panel control, and print control is in a first script language. The web application 41 is in a second script language. The web application 41 permits the template data 42 and the reference data 43 of the label to be edited. That is, as an example of an application, a standalone printing application is created using a first programming language and a second programming language, this makes the functions of the printer available in a first programming language execution environment and a second programming language execution environment. Such an application provides a function for allowing data for functions of the printer in the first programming language execution environment to be edited in the second programming language execution environment. The application package may be downloaded through LAN 11 or may be stored in the label printer 1 in advance and made available with a passcode, for example.

When the installation of the application is completed, as illustrated in FIG. 9, information (e.g., the application name or the like) related to the installed application is displayed on the web utility screen 50. In this manner, all that is necessary to extend the printing function is the installation of the application. Therefore, it is not necessary to modify firmware of the label printer 1, that is, firmware aspects related to provision of the external input device control unit 30, the panel control unit 31, the print control unit 32, and the network control unit 33 do not need to be modified.

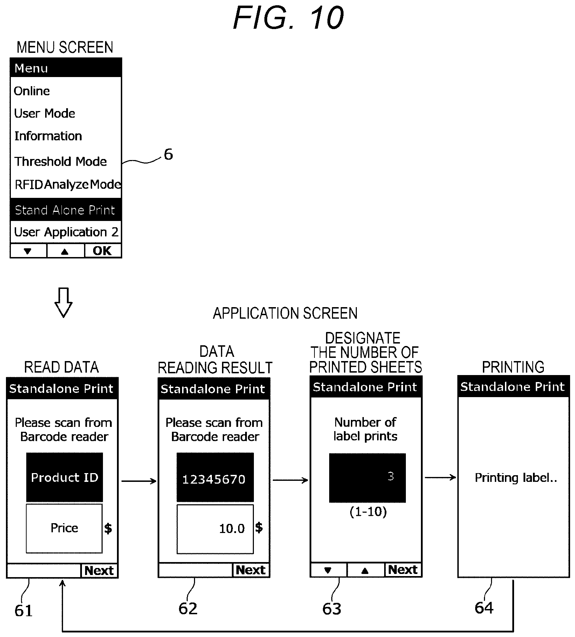

FIG. 10 illustrates an example of screen transitions on the panel 24 when the standalone printing application is executed. A menu screen 6 serving as a basic or default screen displays options and the applications installed in the printer (e.g., menu screen 6 is shown at Act 20 in FIG. 8). The user navigates the menu screen 6 and selects the standalone printing application ("stand alone print") and then presses a hard key (a key functions as "OK") to transition to a next screen. When the hard key is pressed, the application management unit 44 activates the standalone printing application (Act 21 in FIG. 8) and displays a read data screen 61 ("read data") on the panel. The read data screen 61 prompts the user to scan a barcode using the barcode reader. In the case of the label illustrated in FIGS. 5A, 5B, 6A, 6B, and 7, the barcode of a target product is scanned by the barcode reader to acquire a product ID (Act 22 in FIG. 8). The application further refers to a price corresponding to the acquired product ID in the reference data 43, and transitions to a data reading result screen 62 ("data reading result") (Act 23 in FIG. 8).

The data reading result screen 62 displays the product ID and the corresponding price. The user checks the display and then presses a hard key (a key functions as "next") to transition to a next screen. When the hard key is pressed, the application displays a designate the number of printed sheets screen 63 ("designate the number of printed sheets") .

The user designates the number of printed sheets on the designate the number of printed sheets screen 63 (Act 24 in FIG. 8) and presses a hard key (a key functions as "next") to transition to a next screen. The user may press an up key (▲) to increase the number of sheets or a down key (▼) to decrease the number of sheets. When the hard key is pressed to transition to the next screen, the application starts printing and displays a printing screen 64 ("printing") (Act 25 in FIG. 8). When the printing of the designated number of sheets is completed, the application redisplays the read data screen 61. The screens 61 to 64 (illustrating "read data", "data reading result", "designate the number of printed sheets", and "printing") can be set in the panel application 40 (FIG. 3). In such a case, the screen control and screen transition processing can also be provided by the panel application 40.

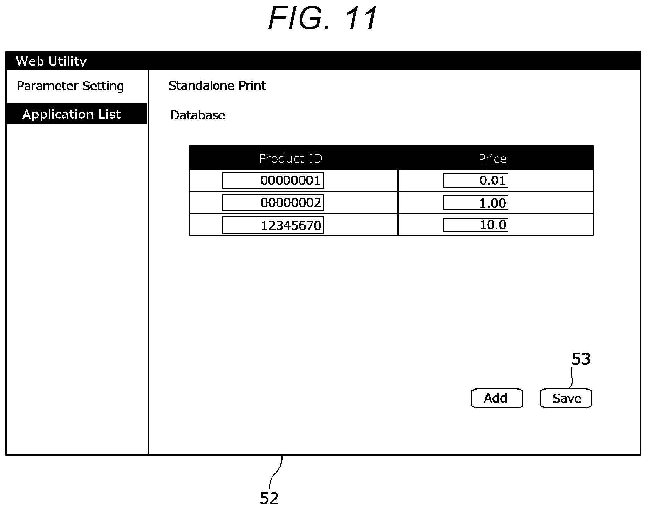

FIG. 11 illustrates an example of a web utility screen 52 for editing the reference data 43. This screen is also published by the web server 46 operating the web utility program 45. After the standalone printing application is installed, the user can view or operate the web utility screen 52 (Act 12 in FIG. 8) through the web browser 14 of the personal computer 10 or the smart device 13. The web utility screen 52 in FIG. 11 displays the values presently in the database of the reference data 43 illustrated in FIG. 7 as initial values. The user operates, for example, a keyboard or a mouse to change each value via the web browser 14, and once finished, presses a save button 53. When the save button 53 is pressed, the application overwrites the previous data and saves the revised data as the reference data 43 (Act 13 in FIG. 8).

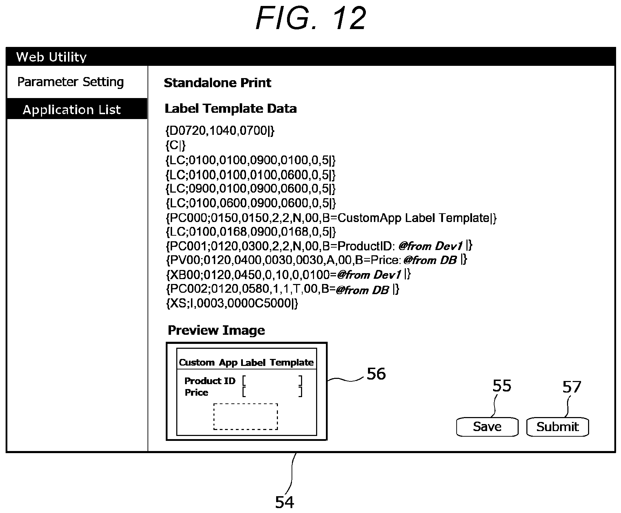

FIG. 12 illustrates an example of a web utility screen 54 for editing the template data 42 of a label. This screen is also published by the web server 46 operating the web utility program 45. After the standalone printing application is installed, the user can view or operate the web utility screen 54 (Act 14 in FIG. 8) through the web browser 14 of the personal computer 10 or the smart device 13. In the web utility screen 54 depicted in FIG. 12, PDL data of the template data 42 illustrated in FIGS. 5A and 5B is displayed as an initial value. The user can edit the template data 42 via the web browser 14 by operating, for example, a keyboard or a mouse, and once finished, presses a save button 55. When the save button 55 is pressed, the application updates and displays a preview 56 of the revised label. The user checks the template data 42 and the preview 56, and presses a submit button 57 if there is no additional editing or the like to be made. When the submit button 57 is pressed, the application overwrites the previous template data 42 and saves the new template data 42 (Act 15 in FIG. 8) .

The web utility screen 54 for editing the template data 42 illustrated in FIG. 12 is an example, and may be a screen on which parts (lines, rectangular text regions, and barcode image regions) can be arranged on a canvas through a GUI operation (e.g., drag and drop) as in drawing software, for example, instead of PDL data (script text data). At this time, a region where variable data is to be embedded in the template may be associated with an external input device 15 such as a barcode reader.

By adopting such a configuration, after the application for executing the standalone printing function is installed in the label printer 1, the template data 42 and the reference data 43 for use in the standalone printing can be edited from the web browser 14 or the like. Accordingly, it is possible to easily modify and update template data 42 and reference data 43. That is, it is not necessary to repackage the modified data in the standalone printing application, and it is not necessary to overwrite a previous installation to install the repackaged application package.

According to the embodiments described above, it is possible to provide a printer capable of easily extending functionality by permitting editing of reference data and/or template data to be used in a label printing or the like.

The embodiments have been presented by way of example and are not intended to limit the scope of the exemplary embodiments. These novel embodiments can be implemented in various other forms, and various omissions, substitutions, and modifications can be made without departing from the scope of the exemplary embodiments. These embodiments and modifications thereof are included in the scope of the exemplary embodiments, and are included in a scope of the exemplary embodiments disclosed in the claims and equivalents thereof.

## Claims

1. A printer, comprising:
an application programming interface (API) configured to interface printer functions including print control for forming a label or a tag;
a first wrapper API configured to interface with the API and make one or more of the printer functions available in a first programming language execution environment;
a second wrapper API configured to interface with the API and make one or more of the printer functions available in a second programming language execution environment; and
an application management unit configured to install and execute an application making one or more of the printer functions available in the first programming language execution environment or the second programming language execution environment, the application using a first programming language or a second programming language and allowing data that is to be used in the first programming language execution environment to be edited in the second programming language execution environment.

2. The printer according to claim 1, wherein
the first programming language is Qt modeling language (qml), and
the second programming language is any one of Python, HTML, CSS, and JavaScript.

3. The printer according to claim 1 or 2, wherein
the first programming language execution environment uses Qt modeling language (qml), and
the second programming language execution environment is a web application execution environment using a Python server.

4. A label printer with preset label templates, the label printer comprising:
a label database storing a preset label template;
a control panel operable by a user;
a printer device for printing a label;
a communication interface connectable to an external device; and
a processor configured to execute one or more programs to provide:
an application programming interface (API) configured to interface printer functions including print control for forming a label or a tag;
a first wrapper API configured to interface with the API and make one or more of the printer functions available in a first programming language execution environment;
a second wrapper API configured to interface with the API and make one or more of the printer functions available in a second programming language execution environment; and
an application management unit configured to install and execute an application making one or more of the printer functions available in the first programming language execution environment or the second programming language execution environment, the application using a first programming language or a second programming language and allowing data that is to be used in the first programming language execution environment to be edited in the second programming language execution environment.

5. The label printer according to claim 4, wherein
the first programming language is Qt modeling language (qml), and
the second programming language is any one of Python, HTML, CSS, and JavaScript.

6. The label printer according to claim 4 or 5, wherein
the first programming language execution environment uses Qt modeling language (qml), and
the second programming language execution environment is a web application execution environment using a Python server.

7. The label printer according to any of claims 1 to 6, wherein
a standalone printing function using the printer functions of input device control, panel control, and printing control is set using the first programming language and the first wrapper API.

8. The label printer according to any of claims 1 to 7, wherein
an editing function for editing a label template using a network control function among the printer functions is performed using the second programming language and the second wrapper API.

9. A printer, comprising:
an application programming interface (API) configured to interface printer functions including print control for forming a label or a tag;
a panel API that is a first wrapper of the API and configured to convert a programming language of the API to cause an external input device control unit, a panel control unit, and a print control unit to operate in a first script language to make one or more of the printer functions available in a first programming language execution environment;
a web application API that is a second wrapper of the API and configured to convert a programming language of the API to cause a network control unit to operate in a second script language to make one or more of the printer functions available in a second programming language execution environment; and
an application management unit configured to install and execute an application making one or more of the printer functions available in the first programming language execution environment or the second programming language execution environment, the application allowing data that is to be used in the first programming language execution environment to be edited in the second programming language execution environment.

10. The printer according to claim 9, wherein
the first script language is Qt modeling language (qml), and
the second script language is any one of Python, HTML, CSS, and JavaScript.

11. The printer according to claim 9 or 10, wherein
the first programming language execution environment uses Qt modeling language (qml), and
the second programming language execution environment is a web application execution environment using a Python server.

12. The printer according to any of claims 9 to 11, wherein
a standalone printing function using the printer functions of the external input device control unit, the panel control unit, and the printing control unit is set using the first script language and the panel API.

13. The printer according to any of claims 9 to 12, wherein
an editing function for editing a label template using the network control unit among the printer functions is performed using the second script language and the web application API.

14. The printer according to any of claims 9 to 13, further comprising:
a label database storing a preset label template;
a control panel operable by a user;
a printer device for printing a label; and
a communication interface connectable to an external device.

15. The printer according to claim 14, wherein the external device is a web server.
